# FASCICULE DE BREVET EUROPEEN

(11) **EP 1 692 849 B1**
(45) Date de publication et mention de la délivrance du brevet: **30.07.2014**
(21) Numéro de dépôt: 04805539.6
(22) Date de dépôt: 24.11.2004
(51) Int. Cl.: H04M 1/253

(54) **SYSTEME DE TELEPHONIE VIA UN RESEAU NUMERIQUE, PERFECTIONNE**
FORTGESCHRITTENES SYSTEM ZUM TELEFONIEREN ÜBER EIN DIGITALES SYSTEM
ADVANCED SYSTEM FOR TELEPHONING VIA A DIGITAL SYSTEM

(30) Priorité: 11.12.2003 FR 0314531
(43) Date de publication de la demande: 23.08.2006
(73) Titulaire: Orange, 75015 Paris (FR)
(72) Inventeur: PETIT, Jean-Pierre, F-22220 Minihy Treguier (FR); ALPERT, Thierry, F-35235 Thorigne-Fouillard (FR); CLEMENT, Marcel, F-22560 Pleumeur Bodou (FR)
(74) Mandataire: Cabinet Plasseraud
(86) Numéro de dépôt international: PCT/FR2004/003010
(87) Numéro de publication internationale: WO 2005/067270

(56) Documents cités:
- EP-A- 1 365 568
- WO-A-99/39467
- WO-A-2004/062249
- US-B1- 6 567 399
- FOO S ET AL: "A telephone adapter for Internet telephony systems" MICROPROCESSORS AND MICROSYSTEMS, IPC BUSINESS PRESS LTD. LONDON, GB, vol. 21, no. 4, 30 décembre 1997 (1997-12-30), pages 213-221, XP004107416 ISSN: 0141-9331
- BERGMARK D ET AL: "BUILDING BLOCKS FOR IP TELEPHONY" IEEE COMMUNICATIONS MAGAZINE, IEEE SERVICE CENTER. PISCATAWAY, N.J, US, vol. 38, no. 4, avril 2000 (2000-04), pages 88-94, XP000949647 ISSN: 0163-6804

## Description

La présente invention concerne la téléphonie via un réseau numérique, tel que le réseau Internet, communément désigné par les termes *"téléphonie sur IP"* ou encore *"voix sur IP",* les initiales IP désignant le protocole Internet (ou *"Internet Protocol" en* vocable anglo-saxon).

La téléphonie sur IP peut offrir la possibilité de communiquer en large bande, avec une qualité et un confort d'écoute améliorés par rapport à une communication via le réseau public commuté RTC (pour *"Réseau Téléphonique Commuté").* Toutefois, généralement, la bande passante du terminal téléphonique, lui-même, doit être suffisante pour être compatible avec les conditions de la communication via le réseau numérique utilisé.

Classiquement, sur le réseau téléphonique commuté, la bande transmise (appelée *"bande étroite"* ou *"bande téléphonique"*) s'étend de 300 Hz à 3400 Hz. Traditionnellement, elle est transportée en analogique via le réseau RTC, jusqu'à une unité de raccordement d'abonné. Les postes RTC utilisent une interface analogique normalisée (désignée, en France, par *"interface Z*"), qui correspond de façon générale à un organe de connexion filaire vers le réseau RTC.

Dans le cas des réseaux numériques, tels que le réseau RNIS (pour *"Réseau Numérique à Intégration de Services*"), le transport de l'information est numérique sur tous les moyens de communication utilisés, d'un abonné jusqu'à l'autre. Le poste RNIS comporte des dispositifs de numérisation et de compression de la parole (par exemple un codeur de parole selon la norme G.711 à 64 kbit/s). Typiquement, la qualité des communications poste à poste, via le réseau RNIS, est meilleure qu'une communication, via le réseau RTC, puisque globalement, dans le réseau RNIS, le transport est numérique et non plus analogique. En particulier, un avantage du réseau numérique est de pouvoir, le cas échéant, offrir des postes téléphoniques en bande élargie, s'étendant typiquement entre 50 Hz et 7000 Hz. Cette mesure procure avantageusement un grand confort et une qualité d'écoute très satisfaisante. Typiquement, un poste complètement numérique doit avoir, à cet effet, des transducteurs acoustiques (microphones et haut-parleurs) appropriés en bandes larges, ainsi que des algorithmes de compression de la parole opérant en bande élargie (par exemple selon la norme UIT-T G.722). Cependant, les postes téléphoniques numériques, propres à opérer notamment sur les réseaux numériques tels que le RNIS, ne sont pas aussi développés que les postes téléphoniques RTC analogiques. C'est la raison pour laquelle les postes RNIS sont peu répandus chez les particuliers. On indique en outre que les postes RNIS à bande élargie ont souvent un prix prohibitif pour la plupart des foyers, en particulier pour des applications domestiques.

Toutefois, le rapide développement des réseaux IP a permis de mettre en oeuvre des technologies de voix sur IP que l'on peut trouver sous différentes formes. Il peut s'agir de systèmes de téléphonie IP dédiés (réseaux d'entreprises, LAN, ou autres), ou encore d'ordinateurs de salon ou stations de travail multimédia (permettant d'opérer souvent en bande élargie) ou encore avec des passerelles (ou boîtiers d'interconnexion) reliés au réseau numérique. Dans ce dernier cas, le transport du poste abonné, vers la passerelle, s'effectue en "mode *RTC"* (analogique) si le terminal est un terminal classique (de type analogique), ou en *"mode RNIS"* si le terminal est un terminal perfectionné, de type numérique.

Plus particulièrement, les communications téléphoniques fixes, mobiles ou sur IP utilisent des terminaux dédiés pour chaque type de réseau d'accès. Typiquement, on indique par exemple qu'en téléphonie sur IP, des ordinateurs multimédia peuvent être utilisés pour coder/décoder et transmettre/recevoir les trames binaires acheminées par le réseau Internet. Actuellement, on propose des boîtiers d'interconnexion entre un téléphone classique du réseau RTC et le réseau Internet. Ces boîtiers fonctionnent à une fréquence d'échantillonnage fixée à 8 kHz, pour respecter la contrainte de la fréquence d'échantillonnage de 8 kHz du réseau public commuté RTC. En conséquence, la qualité de la communication équivaut pratiquement celle d'une communication via le réseau téléphonique commuté. Ainsi, de tels systèmes proposent finalement d'utiliser le réseau Internet en tant que médium de transmission, sans en utiliser certains avantages, notamment en terme de possibilité d'amélioration de la qualité de la communication, puisqu'un tel réseau numérique pourrait largement supporter des fréquences d'échantillonnage supérieures à 8 kHz, notamment. Un exemple est décrit dans le document US6567399.

La présente invention vient améliorer la situation.

Elle prévoit à cet effet un système de téléphonie via un réseau numérique de type Internet, le système comprenant au moins :
- un terminal propre à être relié au réseau public commuté via un organe de connexion filaire, et
- une passerelle d'interconnexion pour relier ledit terminal au réseau numérique.

Selon l'invention, la passerelle est agencée pour opérer à une fréquence d'échantillonnage supérieure à 8 kHz et choisie en fonction d'une bande passante propre au terminal et à l'organe de connexion filaire.

D'autres caractéristiques et avantages de l'invention apparaîtront à la lecture de la description détaillée ci-après et des dessins annexés, sur lesquels :
- la figure 1 est une vue d'ensemble du système au sens de la présente invention ;
- la figure 2 est un organe de connexion filaire (interface Z) pour connecter un terminal classique RTC à une passerelle du type représenté sur la figure 1 ;
- la figure 3a représente les modules d'une passerelle de l'art antérieur ;
- la figure 3b représente les modules d'une passerelle au sens de l'invention ;
- la figure 4a représente les modules d'une passerelle, selon une réalisation préférée de l'invention, opérant en émission ;
- la figure 4b représente les modules d'une passerelle, selon une réalisation préférée de l'invention, opérant en réception ;
- la figure 5a représente les connexions filaires dans un système au sens de la présente invention ;
- la figure 5b représente un détail d'une connexion filaire auprès d'un terminal du système ;
- la figure 5c représente la disposition d'un module d'annulation d'écho dans un système au sens de la présente invention, selon une caractéristique avantageuse ;
- la figure 6a représente un tableau caractérisant la bande passante d'un terminal analogique, habituellement propre à opérer dans un réseau RTC, en réception ;
- la figure 6b représente un tableau caractérisant la bande passante d'un terminal analogique, habituellement propre à opérer dans un réseau RTC, en émission ;
- la figure 7a représente la largeur de bande passante (en limite haute : courbe supérieure, et en limite basse : courbe inférieure), d'un module de connexion filaire, de type *"interface Z",* en émission ;
- la figure 7b représente la largeur de bande passante (en limite haute : courbe supérieure, et en limite basse : courbe inférieure), d'un module de connexion filaire, de type *"interface Z"*, en réception.

Tout d'abord, on rappelle que l'invention propose d'utiliser des postes téléphoniques classiques RTC, à interface analogique, traditionnelle, pour transporter de la voix sur IP, tout en prévoyant une fréquence d'échantillonnage supérieure à 8 kHz.

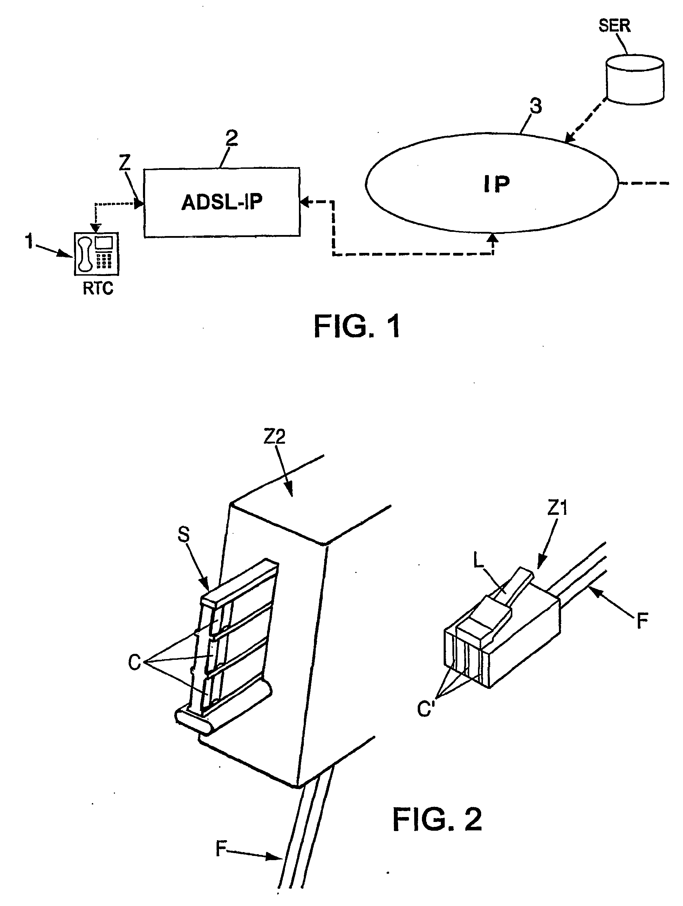

Dans la normalisation française, avec une extension européenne, cette interface analogique se présente sous la forme d'une *"interface Z"* qui sera décrite en référence à la figure 2.

Selon un préjugé classique dans ce domaine, ces terminaux ou postes téléphoniques RTC ont une bande passante étroite (dite *"bande téléphonique")* s'étendant de 300 à 3400 Hz. Or, ces postes n'ont pas nécessairement une bande passante aussi étroite. C'est en fait le réseau RTC complet qui a une telle bande passante comprise entre 300 et 3400 Hz. Les constructeurs de passerelles connues vers le réseau IP ont alors prévu une fréquence d'échantillonnage maximale de 8 kHz, avec des terminaux RTC classiques. Or, la Demanderesse a constaté qu'un terminal RTC classique, muni d'une interface de connexion tout aussi classique, avait une bande passante qui s'étend au-delà de 4000 Hz, ce qui permet très avantageusement de prévoir des fréquences d'échantillonnage supérieures à 8 kHz.

Selon l'invention, on applique de tels postes RTC directement sur un adaptateur de réseau numérique, de type IP, afin de transporter la parole, avec toutefois un mode de qualité améliorée par rapport aux réseaux RTC classiques. A cet effet, le système opère dans une bande passante élargie par rapport à la bande téléphonique étroite, tout en utilisant les mêmes terminaux RTC à interface Z existants. De là, on comprendra que l'on peut augmenter la fréquence d'échantillonnage fixée à 8 kHz dans les réseaux RTC classiques. On rappelle que de tels terminaux RTC sont largement répandus et très diffusés auprès des particuliers, car ils sont peu coûteux.

Ainsi, en se référant à la figure 1, le système au sens de l'invention comporte un terminal correspondant à un téléphone RTC classique, référencé 1, et relié à un module de connexion filaire, par exemple du type *"interface Z"*. L'organe de connexion filaire Z est enfiché dans un boîtier de connexion, référencé 2, lequel est relié au réseau numérique 3, par exemple de type Internet. Ainsi, le boîtier 2 joue le rôle de passerelle entre le terminal 1 et le réseau IP 3. On indique à titre d'exemple que dans le contexte de la figure 1, la passerelle 2 peut se présenter sous la forme d'un boîtier d'interconnexion équipé aux standards ADSL (pour *"Asymmetrical Digital Subscriber Line",* de tels boîtiers offrant couramment des fonctions de transport de voix sur IP.

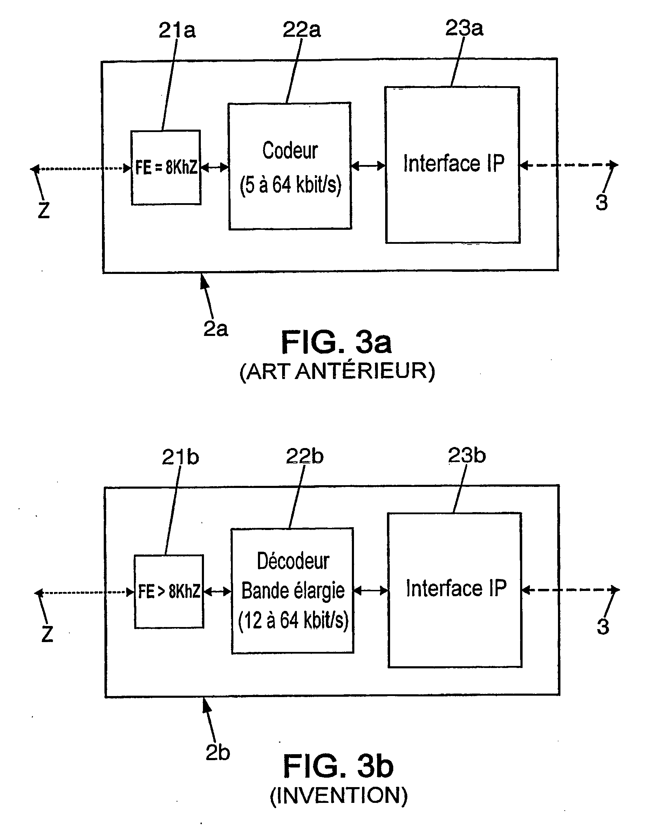

De manière générale, on indique que les systèmes connus et que proposent actuellement les constructeurs et opérateurs assurent une connexion d'un terminal RTC classique, à interface Z, sur un boîtier de connexion, par exemple ADSL vers IP, avec une conversion des signaux analogiques en signaux de parole sur IP (dits *"voix sur IP"* ou *"VOIP"),* en émission. Toutefois, de tels boîtiers d'interconnexion sont agencés structurellement pour fonctionner en bande étroite lorsqu'ils sont connectés à un téléphone classique RTC car leur fréquence d'échantillonnage est alors au maximum de 8 kHz. En effet, cette bande étroite, s'étendant d'environ 300 Hz à 3400 Hz, est typiquement celle qui est véhiculée classiquement par le réseau téléphonique commuté. Ainsi, de tels boîtiers d'interconnexion, ou passerelles, de l'art antérieur, lorsqu'ils sont connectés à un téléphone classique RTC, échantillonnent le signal analogique à une fréquence d'échantillonnage de 8 kHz, ce qui reste compatible avec une bande passante jusqu'à 3400 Hz, selon le théorème de Shannon. En se référant à la figure 3a, relative à l'art antérieur, une passerelle connue comporte un convertisseur analogique/numérique et numérique/analogique, portant la référence 21a, et opérant à une fréquence d'échantillonnage de 8 kHz. La passerelle portant la référence 2a sur la figure 3a comporte en outre un codeur (en compression) de parole 22a, opérant à bas débit, pour transmettre de la voix sur IP (typiquement de 5 à 64 kbit/s). Pour l'émission, la passerelle 2a comporte enfin un module de mise en trame et d'interface IP, typiquement selon un protocole RTP/UDP pour transmettre les trames de signaux codés sur le réseau IP.

Ainsi, le système au sens de l'art antérieur opère globalement à la fréquence d'échantillonnage de 8 kHz, pour transmettre une bande passante s'étendant au maximum à 4000 Hz. Le choix de cette fréquence d'échantillonnage de 8 kHz résulte d'un préjugé classique dans le domaine de la téléphonie, selon lequel un terminal RTC classique et l'interface Z de sa connexion vers une passerelle auraient une bande passante s'étendant au maximum à 4000 Hz, vers les hautes fréquences.

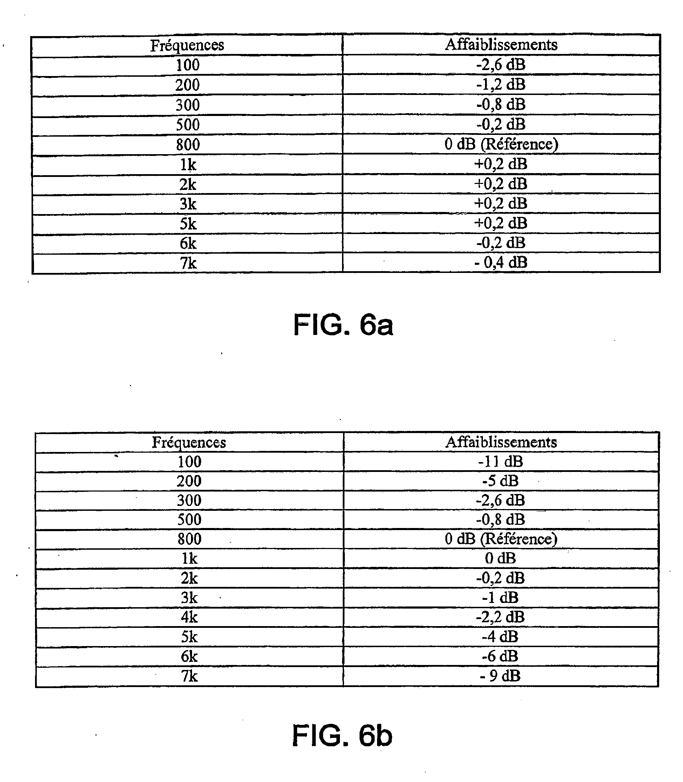

La Demanderesse a constaté que la bande passante de cet ensemble pouvait s'étendre au-delà de cette limite, comme on le verra maintenant en référence aux figures 6a à 7b. Sur la figure 6a, on a représenté, en fonction de la fréquence sonore, l'atténuation en décibels (ou affaiblissement) caractérisant la largeur de bande passante dans un téléphone RTC classique, ici de type AMARYS-200™, à titre non limitatif. Pour faire ces mesures sur un signal électrique, le combiné a été remplacé par un transformateur en réception, de manière à récupérer le signal de mesure que devrait recevoir l'écouteur. Il apparaît, sur les valeurs données dans ce tableau, que la bande passante de ce poste téléphonique peut s'étendre jusqu'au-delà de 5 kHz, en réception.

On se réfère maintenant à la figure 6b sur laquelle on a représenté l'affaiblissement en fréquence pour un même poste téléphonique, en émission. Pour faire ces mesures, le combiné a été remplacé par un transformateur en émission, de manière à injecter le signal de mesure, sur le poste téléphonique et à la place du microphone. Là encore, on constate qu'un affaiblissement notoire n'est constaté que pour des fréquences inférieures à 200 Hz et supérieures à 6 kHz. Ainsi, en émission, la largeur de bande passante s'étend, en fait, au-delà de la limite de 5 kHz.

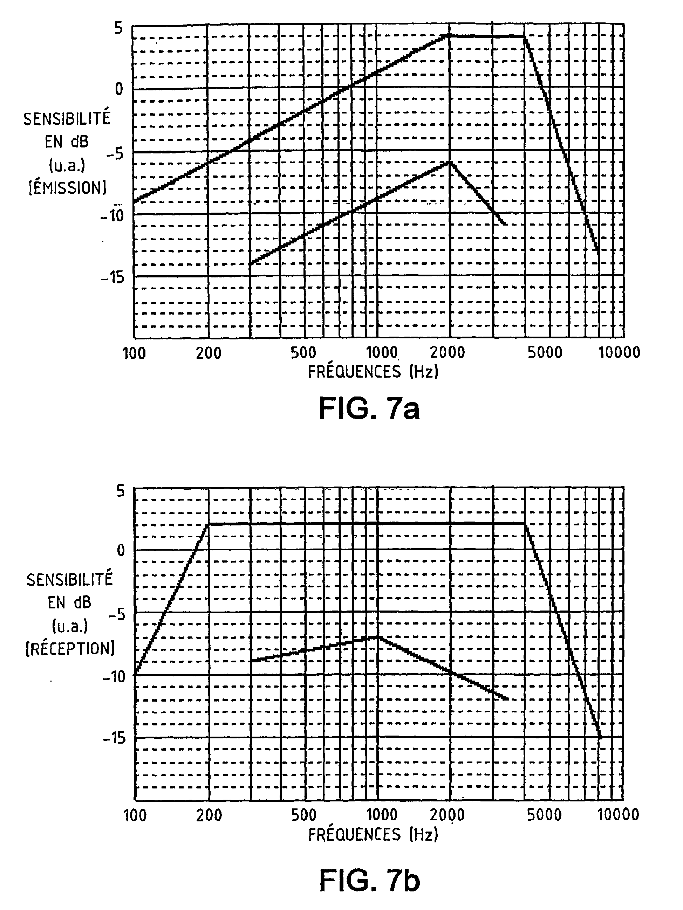

On décrit maintenant les caractéristiques d'un module de connexion filaire, et en particulier d'une interface Z, en référence aux figures 7a et 7b. Auparavant, on indique simplement, en référence à la figure 2, qu'une interface Z comporte un organe de connexion Z1 (dite "*interface Rj45*"), muni d'une languette d'encliquetage L surmoulée dans un corps de connexion muni d'une pluralité de languettes conductrices C'. Ces languettes conductrices C' sont connectées aux deux fils conducteurs F. A l'autre extrémité des fils F, on connecte généralement un organe Z2 muni aussi de languettes conductrices C solidarisées à un support S. Typiquement, l'organe de connexion Z2, tel que représenté sur la figure 2, est généralement destiné à être inséré dans un organe de connexion femelle, tel qu'une prise murale dans une habitation. Cet organe femelle est habituellement relié au réseau public commuté classique.

On comprendra que l'organe de connexion Z2 de la figure 2 n'y est représenté qu'à titre explicatif. Habituellement, on utilisera plutôt l'organe Z1 pour connecter l'interface Z à la passerelle.

Sur les figures 7a et 7b, on a représenté la sensibilité en décibels, en émission pour la figure 7a et en réception pour la figure 7b, d'une interface Z telle que représentée partiellement sur la figure 2. On constate qu'en se fixant un seuil de sensibilité à -5 dB, en émission comme en réception, pour la limite supérieure en sensibilité (courbes supérieures), la largeur de bande passante d'une interface Z s'étend encore au-delà de la limite en fréquence de 5000 Hz, comme pour le poste téléphonique dont les caractéristiques ont été décrites ci-avant en référence aux figures 6a et 6b.

On indique que des détails supplémentaires concernant cette interface Z peuvent être trouvés dans le descriptif de la norme ETSI TBR 38 concernant des postes analogiques européens connectés au réseau RTC.

On retiendra surtout que, tant pour le poste classique RTC que pour l'interface Z, l'atténuation aux très basses fréquences et aux très hautes fréquences n'est pas réellement sévère.

Un terminal RTC classique et un organe filaire tel qu'une interface Z, possèdent, ensemble, une largeur de bande passante pouvant aller au-delà de la fréquence limite de 4000 Hz. Par conséquent, la fréquence d'échantillonnage à laquelle opère une passerelle d'interconnexion vers le réseau IP peut être supérieure à 8 kHz, ce qui peut avantageusement conférer une meilleure qualité de la communication et un plus grand confort d'écoute.

La passerelle du système au sens de la présente invention prévoit à cet effet un module d'échantillonnage à une fréquence supérieure à 8 kHz, par exemple 11 kHz ou encore 16 kHz, comme on le verra plus loin, ou autres. En effet, en se référant à la figure 3a représentant une passerelle d'un système au sens de la présente invention, une telle passerelle, référencée 2b, comporte :
- un module 21b d'échantillonnage (convertisseur analogique/numérique et numérique/analogique), capable d'opérer à une fréquence d'échantillonnage supérieure à 8 kHz (typiquement de 11 à 16 kHz) ;
- un codeur de parole 22b opérant en bande élargie et à bas débit (typiquement de 12 à 64 kbit/s du fait de l'élargissement de la bande passante) ; et
- un module 23b de mise en trame, tel qu'une interface IP selon le protocole RTP/UDP.

Ainsi, on comprendra que l'invention permet d'obtenir une qualité vocale et un agrément d'écoute, en contexte de voix sur IP, supérieurs à ceux que confère la téléphonie sur IP lorsqu'elle utilise des passerelles de l'art antérieur associées à des terminaux RTC classiques. Un avantage que procure l'invention est qu'elle permet d'utiliser toutefois le parc des téléphones RTC classiques qui existent déjà auprès des particuliers. On comprendra ainsi que la passerelle du système au sens de la présente invention joue un rôle prépondérant dans l'invention, dans la mesure où sa fréquence d'échantillonnage permet une bonne qualité de la communication, tout en interconnectant un terminal RTC classique au réseau IP. A ce titre, la présente invention vise aussi une telle passerelle.

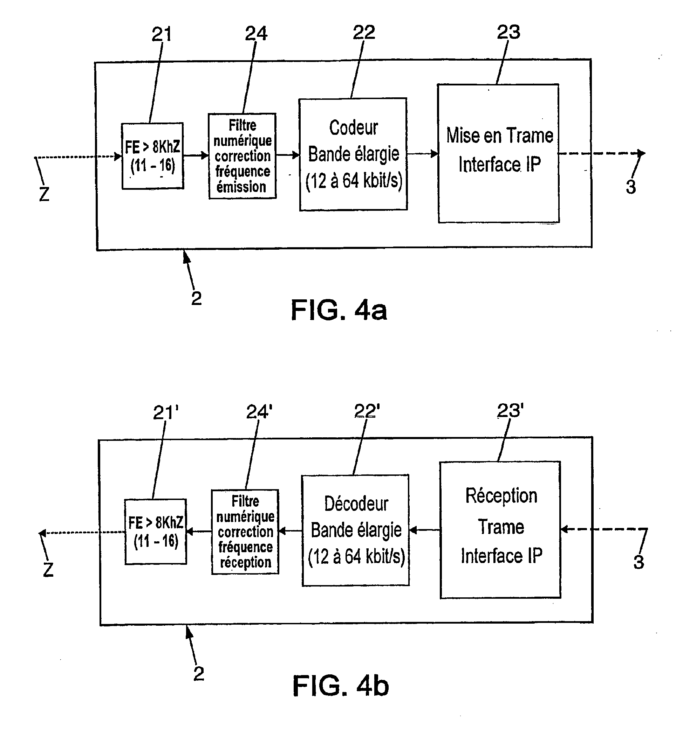

On décrit maintenant quelques formes de réalisation préférées de la présente invention, en référence aux figures 4a à 5c.

On a représenté sur la figure 4a la passerelle d'un système selon un mode de réalisation préféré de la présente invention, en émission. On indique en particulier qu'un jeu de filtres numériques, portant la référence 24, est prévu entre le module d'échantillonnage (convertisseur analogique/numérique) 21 et le codeur de parole 22. Il s'agit de filtres de compensation de fréquence en émission de manière à compenser les affaiblissements en basses et hautes fréquences (inférieures à 300 Hz et supérieures à 4000 Hz) dont pourraient souffrir le terminal classique RTC et l'interface Z. Cette mesure permet avantageusement de prévoir une fréquence d'échantillonnage supérieure encore à 11 kHz et, le cas échéant, pouvant atteindre 16 kHz, comme l'a constaté la Demanderesse.

Ainsi, le convertisseur analogique/numérique 21 peut être agencé pour échantillonner à une fréquence de 11,025 kHz, 12 kHz, ou encore 16 kHz, selon les standards d'échantillonnage prévus. On indique que, dans certaines conditions (terminal, interface et filtre adéquats), la fréquence d'échantillonnage peut aller encore au-delà de 16 kHz.

Avantageusement, lors de l'installation d'une passerelle au sens de la présente invention auprès d'un particulier, les fonctions de correction adéquates des filtres numériques 24 peuvent être téléchargées via le réseau IP, par exemple à partir d'un serveur SER (figure 1). Cette mesure s'avère avantageuse puisque l'on fournit un jeu de filtres de compensation choisi en fonction du type de terminal téléphonique RTC qui est utilisé et, plus particulièrement, en fonction de ses caractéristiques de bande passante, en émission et en réception. Il peut alors être prévu un échange de données via le réseau IP selon lequel l'utilisateur déclare le type de poste téléphonique qu'il possède et, en échange, reçoit du serveur distant SER les instructions, sous la forme d'un programme informatique, nécessaires pour implémenter les filtres numériques 24. Ainsi, de tels filtres numériques 24 permettent de pallier les défauts du terminal RTC et de l'interface Z dans les basses et hautes fréquences, en élargissant la bande passante -du système dans son ensemble. Dans ces conditions, la Demanderesse a constaté qu'un échantillonnage jusqu'à une fréquence de 16 kHz peut être appliqué.

En se référant maintenant à la figure 4b, on indique que la passerelle au sens de la présente invention prévoit un jeu de filtres 24 en émission et un jeu de filtres 24', distinct, en réception, pour tenir compte des caractéristiques, respectivement en émission et en réception, de l'ensemble formé par le terminal RTC et l'interface Z, puisque l'on a vu ci-avant, en référence aux figures 6a à 7b, que la bande passante en émission de cet ensemble pouvait être différente de la bande passante en réception.

On peut prévoir alors, de la même manière, en réception, un convertisseur numérique/analogique 21', capable d'opérer à une fréquence d'échantillonnage pouvant atteindre 16 kHz.

Dans une réalisation, la passerelle comporte un codeur de parole (pour une réduction de débit) en bande élargie et fonctionnant à une fréquence d'échantillonnage supérieure à 8 kHz. Par exemple, un tel codeur de parole 22 (ou réciproquement décodeur de parole 22' sur la figure 4b) peut procurer un débit de codage qui est fonction de la qualité souhaitée. Actuellement, des algorithmes de compression de parole en bande élargie proposent des débits variant de 12 à 32 kbit/s. De plus, en utilisant des codeurs en bande élargie plus anciens tels que le codeur selon la norme UIT-T G.722, un débit de 64 kbit/s peut être utilisé.

Dans une variante avantageuse, le codeur/décodeur de parole (22/22' sur les figures 4a et 4b) peut être un codeur en bande élargie hiérarchique, basé sur un coeur de codage en bande téléphonique normalisée. A titre d'exemple, il peut s'agir des codeurs selon la norme UIT-T G.723.1 ou G.729. Un tel codeur est capable de fonctionner globalement à 16 kHz en fréquence d'échantillonnage, mais avec un coeur de codage à 8 kHz qui code la bande 0-4000 Hz. On indique qu'un algorithme (par exemple un codage par transformée, de type MDCT ou autre) enrichit le signal issu du coeur de codage, en codant et en comprimant par ajout d'informations dans le flux binaire finalement délivré. Typiquement, la bande passante alors transmise dans ces conditions s'étend au-delà de 4000 Hz. On comprendra qu'ainsi, la qualité de la communication est améliorée par rapport à celle sur un réseau RTC classique.

On indique en outre qu'un codeur de parole tel qu'un codeur selon la norme G.723.1 ou G.729, associé à un module d'amélioration de la qualité (tel que l'algorithme précité) et assurant une extension de la bande passante permet avantageusement une intercommunication avec tous types de terminaux (IP ou à bande étroite). Des précisions quant à l'implémentation d'un tel codeur sont données dans la demande FR-03 00164.

La passerelle, selon cette réalisation qui prévoit un codeur hiérarchique, peut aussi établir des communications VOIP classiques (en bande étroite), si les terminaux en communication avec le système selon l'invention sont des terminaux RTC classiques. Dans ces conditions, les deux postes communiquent via le réseau IP au débit le plus petit, à une fréquence d'échantillonnage de 8 kHz et en bande étroite. En particulier, les flux binaires transmis du codeur hiérarchique sont issus du coeur de codage à 8 kHz, sans élargissement de bande.

La passerelle, selon cette réalisation qui prévoit un codeur hiérarchique, peut aussi établir des communications avec des terminaux équipés d'une passerelle au sens de la présente invention, pour profiter de la large bande passante et du confort d'écoute que procure une fréquence d'échantillonnage élevée, au sens de la présente invention.

Enfin, la passerelle; selon cette réalisation qui prévoit un codeur hiérarchique peut toujours assurer des communications avec des terminaux numériques équipés d'une passerelle opérant à fréquence d'échantillonnage élevée. Dans ce cas, ce seront alors les caractéristiques du terminal RTC et de son interface, dans le système selon l'invention, qui limiteront la bande passante de la communication.

Ce choix des codeurs de parole permet avantageusement de n'avoir qu'un seul codeur. Dans ce cas, les flux binaires sont envoyés ou reçus alors qu'ils dépendent de la configuration du poste de l'appelé, comme indiqué ci-avant.

On retiendra que le système selon ce mode de réalisation (muni d'un codeur hiérarchique) opère avec une qualité qui s'adapte au contexte de la communication avec une autre entité, par exemple avec une bande passante variable selon le type de poste téléphonique et de passerelle de l'appelé.

En bref, le système au sens de l'invention peut alors communiquer :
- en bande étroite avec des terminaux RTC classiques ; ou
- en bande passante élargie, lorsque l'appelé utilise un codeur de parole à bande élargie.

Plus précisément, le codeur/décodeur 22/22' permet de communiquer :
- en bande élargie entre deux postes du même type (équipés d'une passerelle au sens de la présente invention) ;
- en bande élargie avec un autre abonné qui dispose d'un téléphone numérique IP en bande élargie (si le codeur en bande élargie qu'utilise l'appelant est le même que celui qu'utilise l'appelé) ;
- en bande étroite avec des abonnés qui ne disposent pas d'une passerelle au sens de la présente invention, ou encore qui utilisent un terminal classique, en passant par une passerelle classique du réseau de - communication RTCI/P.

On comprendra alors que des fonctions d'établissement d'appels, de gestion de protocoles et de flux audio IP peuvent avantageusement être téléchargés du serveur SER représenté sur la figure 1. A cet effet, le serveur SER comporte une mémoire stockant des instructions pour mettre en oeuvre, sous la forme d'un programme informatique, de tels protocoles pour amorcer la communication entre abonnés. On indique en outre que des applications logicielles propres au codeur/décodeur 22/22' peuvent être aussi téléchargées d'un serveur.

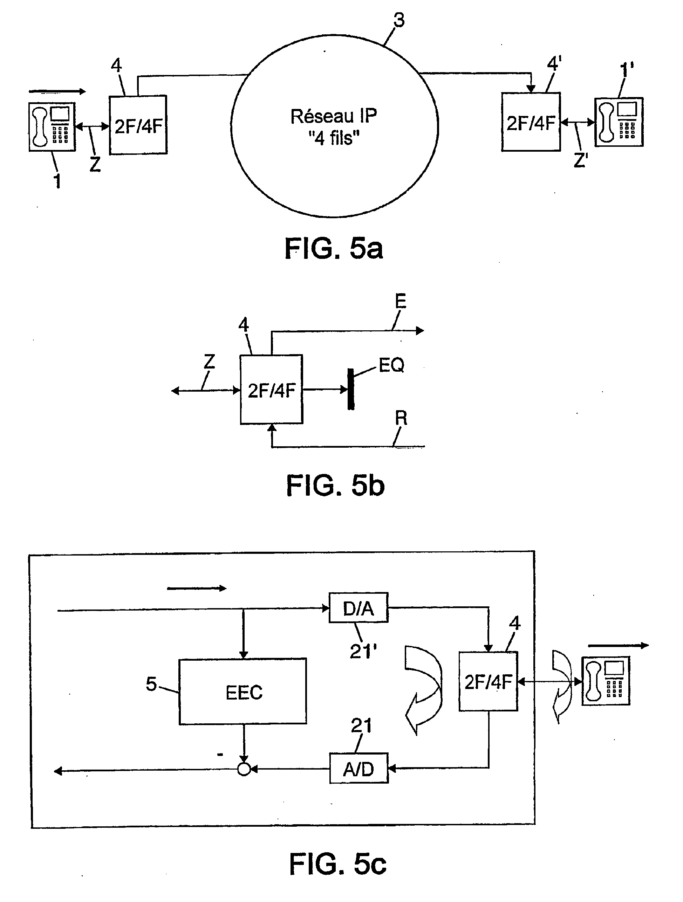

Selon une autre caractéristique avantageuse, la passerelle comporte en outre un module d'annulation d'écho électrique fonctionnant à une fréquence supérieure à la fréquence d'échantillonnage classique de 8 kHz. Cet écho est habituellement dû au passage d'une connexion filaire à deux fils (interface Z) comme représenté sur la figure 5a, à une connexion filaire à *"quatre fils",* notamment lorsque l'on passe vers le réseau IP 3. En se référant à la figure 5b, l'interface Z est bifilaire, tandis que l'on prévoit, à l'interconnexion 4, une paire de fils pour l'émission (flèche E) et une deuxième paire de fils pour la réception (flèche R), une impédance d'équilibrage EQ étant prévue à l'interconnexion 4.

En se référant maintenant à la figure 5c, la passerelle au sens de la présente invention comporte avantageusement le module d'annulation d'écho 5, interposé en amont des convertisseurs analogique/numérique 21 et numérique/ analogique 21'. On indique que de tels annuleurs d'écho sont connus dans des passerelles opérant à des fréquences d'échantillonnage inférieures ou égales à 8 kHz. Ici, l'annuleur d'écho 5, dans la passerelle au sens de la présente invention, opère à la fréquence d'échantillonnage globale de la passerelle (supérieure à 8 kHz, par exemple 11, 12 ou 16 kHz, comme indiqué ci-avant).

Bien entendu, la présente invention ne se limite pas aux formes de réalisation décrites ci-avant à titre d'exemples ; elle s'étend à d'autres variantes comme couvert par les revendications suivantes.

Ainsi, on comprendra que la présente invention peut aussi bien s'appliquer à des terminaux sans fil, en transmission analogique, si de tels terminaux ne limitent pas sévèrement la largeur de bande passante.

## Revendications

1. Système de téléphonie via un réseau numérique de type Internet, le système comprenant au moins :
- un terminal propre à être relié au réseau public commuté via un organe de connexion filaire (Z), et
- une passerelle d'interconnexion pour relier ledit terminal au réseau numérique,
**caractérisé en ce que** la passerelle est agencée pour opérer à une fréquence d'échantillonnage supérieure à 8 kHz et choisie en fonction d'une bande passante propre audit terminal et audit organe de connexion filaire.

2. Système selon la revendication 1, **caractérisé en ce que** le terminal et l'organe de connexion filaire (Z) possèdent une bande passante s'étendant au moins jusqu'à 4 kHz et, de préférence, comprise sensiblement entre 300 Hz et au moins 4 kHz.

3. Système selon la revendication 2, **caractérisé en ce que** la passerelle d'interconnexion comporte au moins un jeu de filtres de compensation pour élargir encore ladite bande passante.

4. Système selon la revendication 3, **caractérisé en ce que** la passerelle d'interconnexion comporte au moins :
- un jeu de filtres de compensation en émission, et
- un jeu de filtres de compensation en réception.

5. Système selon l'une des revendications 1 à 4, **caractérisé en ce que** ledit terminal est de type analogique.

6. Système selon l'une des revendications précédentes, **caractérisé en ce que** la passerelle comporte un module d'échantillonnage à une fréquence de plus de 8 kHz, de préférence comprise entre 11 et 16 kHz.

7. Système selon l'une des revendications précédentes, **caractérisé en ce que** le terminal est relié à la passerelle par ledit organe de connexion filaire (Z),
et **en ce que** la passerelle comporte en outre un module d'annulation d'échos capable d'opérer à une fréquence d'échantillonnage supérieure à 8 kHz.

8. Système selon l'une des revendications précédentes, **caractérisé en ce que** la passerelle comporte en outre un module de codage/décodage de parole, capable d'opérer en fréquence d'échantillonnage supérieure à 8 kHz et en bande élargie, s'étendant au-delà de 4000 Hz.

9. Système selon l'une des revendications 1 à 7, **caractérisé en ce que** la passerelle comporte en outre un module de codage/décodage de parole, de type codeur de parole hiérarchique, opérant en qualité de communication s'adaptant au contexte de la communication avec une autre entité.

10. Système selon l'une des revendications 3 et 4, **caractérisé en ce qu'**il comporte en outre un serveur comportant une mémoire stockant des instructions pour former ledit jeu de filtres de compensation, sous forme numérique et adaptée à des caractéristiques de bande passante du terminal et de l'organe de connexion filaire,
et **en ce que** la passerelle est agencée pour télécharger lesdites instructions du serveur.

11. Système selon la revendication 9, **caractérisé en ce qu'**il comporte en outre un serveur muni d'une base de données comportant des informations sur la fréquence d'échantillonnage et/ou sur un type de module de codage/décodage de postes d'abonnés,
et **en ce que** la passerelle est agencée pour télécharger lesdites informations du serveur et imposer une forme de codage/décodage audit module de codage/décodage.

12. Système selon la revendication 11, **caractérisé en ce que** le serveur stocke en outre des instructions de protocole pour établir une communication entre au moins deux postes d'abonnés.

13. Passerelle d'interconnexion à un réseau numérique de type Internet, pour relier un terminal de téléphonie propre à être relié au réseau public commuté via un organe de connexion filaire (Z),
**caractérisée en ce que** la passerelle est agencée pour opérer à une fréquence d'échantillonnage supérieure à 8 kHz, et choisie en fonction d'une bande passante propre audit terminal et audit organe de connexion filaire.

## Patentansprüche

1. System zum Telephonieren über ein digitales Netz des Typs Internet, wobei das System wenigstens Folgendes umfasst:
- ein geeignetes Endgerät, das mit dem öffentlichen Vermittlungsnetz über ein drahtgebundenes Verbindungsorgan (Z) verbunden sein kann, und
- ein Verbindungs-Gateway, um das Endgerät mit dem digitalen Netz zu verbinden,
**dadurch gekennzeichnet, dass** das Gateway dafür ausgelegt ist, mit einer Abtastfrequenz größer als 8 kHz zu arbeiten, und als Funktion eines für das Endgerät und für das drahtgebundene Verbindungsorgan geeigneten Durchlassbands gewählt wird.

2. System nach Anspruch 1, **dadurch gekennzeichnet, dass** das Endgerät und das drahtgebundene Verbindungsorgan (Z) ein Durchlassband besitzen, das wenigstens bis 4 kHz reicht und vorzugsweise im Wesentlichen im Bereich von 300 Hz bis wenigstens 4 kHz liegt.

3. System nach Anspruch 2, **dadurch gekennzeichnet, dass** das Verbindungs-Gateway wenigstens einen Satz Kompensationsfilter umfasst, um das Durchlassband weiter zu verbreitern.

4. System nach Anspruch 3, **dadurch gekennzeichnet, dass** das Verbindungs-Gateway wenigstens Folgendes umfasst:
- einen Satz Sende-Kompensationsfilter und
- einen Satz Empfangs-Kompensationsfilter.

5. System nach einem der Ansprüche 1 bis 4, **dadurch gekennzeichnet, dass** das Endgerät vom analogen Typ ist.

6. System nach einem der vorhergehenden Ansprüche, **dadurch gekennzeichnet, dass** das Gateway ein Modul zum Abtasten mit einer Frequenz von mehr als 8 kHz und vorzugsweise im Bereich von 11 bis 16 kHz umfasst.

7. System nach einem der vorhergehenden Ansprüche, **dadurch gekennzeichnet, dass** das Endgerät mit dem Gateway über das drahtgebundene Verbindungsorgan (Z) verbunden ist,
und dass das Gateway außerdem ein Echobeseitigungsmodul umfasst, das bei einer Abtastfrequenz von mehr als 8 kHz arbeiten kann.

8. System nach einem der vorhergehenden Ansprüche, **dadurch gekennzeichnet, dass** das Gateway außerdem ein Sprachcodierungs-/Sprachdecodierungsmodul umfasst, das bei einer Abtastfrequenz von mehr als 8 kHz und in einem verbeiterten Band, das bis über 4000 Hz hinaus reicht, arbeiten kann.

9. System nach einem der Ansprüche 1 bis 7, **dadurch gekennzeichnet, dass** das Gateway außerdem ein Sprachcodierungs-/Sprachdecodierungsmodul des Typs hierarchischer Sprachcodierer umfasst, der mit einer Kommunikationsqualität arbeitet, die sich an den Kontext der Kommunikation mit einer anderen Entität anpasst.

10. System nach einem der Ansprüche 3 und 4, **dadurch gekennzeichnet, dass** es außerdem einen Server umfasst, der einen Speicher enthält, der Befehle speichert, um den Satz Kompensationsfilter in digitaler Form und angepasst an die Charakteristiken des Durchlassbandes des Endgeräts und des drahtgebundenen Verbindungsorgans zu bilden,
und dass das Gateway ausgelegt ist, die Befehle des Servers herunterzuladen.

11. System nach Anspruch 9, **dadurch gekennzeichnet, dass** es außerdem einen Server umfasst, der mit einer Datenbank versehen ist, die Informationen über die Abtastfrequenz und/oder einen Typ des Codierungs-/Decodierungsmoduls abonnierter Stationen enthält,
und dass das Gateway ausgelegt ist, die Informationen des Servers herunterzuladen und dem Codierungs-/Decodierungsmodul eine Codierungs-/Decodierungsform aufzuerlegen.

12. System nach Anspruch 11, **dadurch gekennzeichnet, dass** der Server außerdem Protokollbefehle speichert, um eine Kommunikation zwischen wenigstens zwei abonnierten Stationen aufzubauen.

13. Gateway für die Verbindung mit einem digitalen Netz des Typs Internet, um ein geeignetes Telephonendgerät, das mit dem öffentlichen Vermittlungsnetz verbunden werden soll, über ein drahtgebundenes Verbindungsorgan (Z) zu verbinden,
**dadurch gekennzeichnet, dass** das Gateway ausgelegt ist, mit einer Abtastfrequenz größer als 8 kHz zu arbeiten, und als Funktion eines für das Endgerät und für das drahtgebundene Verbindungsorgan geeigneten Durchlassbands gewählt wird.

## Claims

1. Telephony system via a digital network of Internet type, the system comprising at least:
- a terminal suitable for being linked to the switched public network via a wired connecting element (Z), and
- an interconnecting gateway for linking said terminal to the digital network,
**characterized in that** the gateway is arranged to operate at a sampling frequency above 8 kHz and chosen as a function of a bandwidth suitable for said terminal and for said wired connecting element.

2. System according to Claim 1, **characterized in that** the terminal and the wired connecting element (Z) have a bandwidth extending at least up to 4 kHz and, preferably, comprised substantially between 300 Hz and at least 4 kHz.

3. System according to Claim 2, **characterized in that** the interconnecting gateway includes at least one set of compensating filters to further widen said bandwidth.

4. System according to Claim 3, **characterized in that** the interconnecting gateway includes at least:
- a set of compensating filters on transmission, and
- a set of compensating filters on reception.

5. System according to one of Claims 1 to 4, **characterized in that** said terminal is of analogue type.

6. System according to one of the preceding claims, **characterized in that** the gateway includes a module sampling at a frequency of over 8 kHz, preferably comprised between 11 and 16 kHz.

7. System according to one of the preceding claims, **characterized in that** the terminal is linked to the gateway by said wired connecting element (Z),
and **in that** the gateway furthermore includes an echo cancellation module capable of operating at a sampling frequency above 8 kHz.

8. System according to one of the preceding claims, **characterized in that** the gateway furthermore includes a speech encoding/decoding module, capable of operating at a sampling frequency above 8 kHz and extending beyond 4000Hz in wideband.

9. System according to one of Claims 1 to 7, **characterized in that** the gateway furthermore includes a speech encoding/decoding module, of hierarchical speech encoder type, operating with communication quality adapting to the context of the communication with another entity.

10. System according to one of Claims 3 and 4, **characterized in that** it furthermore comprises a server including a memory storing instructions for forming said set of compensating filters, in digital form and adapted to bandwidth features of the terminal and of the wired connecting element,
and **in that** the gateway is arranged to download said instructions from the server.

11. System according to Claim 9, **characterized in that** it furthermore comprises a server equipped with a database including information on the sampling frequency and/or on a type of encoding/decoding module for subscriber stations,
and **in that** the gateway is arranged to download said information from the server and impose a form of encoding/decoding on said encoding/decoding module.

12. System according to Claim 11, **characterized in that** the server furthermore stores protocol instructions for establishing a communication between at least two subscriber stations.

13. Gateway for interconnecting to a digital network of Internet type, for linking a telephony terminal suitable for being linked to the switched public network via a wired connecting element (Z), **characterized in that** the gateway is arranged to operate at a sampling frequency above 8 kHz, and chosen as a function of a bandwidth suitable for said terminal and for said wired connecting element.
